# EUROPEAN PATENT APPLICATION

(11) **EP 1 559 873 A2**
(43) Date of publication of application: **03.08.2005**
(21) Application number: 04257373.3
(22) Date of filing: 27.11.2004
(51) Int. Cl.: F01D 11/00, F02C 7/28

(54) **Sealing arrangement for turbomachinery**

(30) Priority: 28.01.2004 GB 0401874
(71) Applicant: ROLLS-ROYCE plc, London, SW1E 6AT (GB)
(72) Inventor: Morgan, Jonathan James, Swindon Wiltshire SN2 2DG (GB); Richards, David William, Portishead Bristol BS20 8HQ (GB)
(74) Representative: Bird, Vivian John

(57) **Abstract**

A sealing arrangement (36) for sealing a leakage gap between relatively moveable parts in a flow path between a region of high pressure (A) and a region of low pressure (B). The sealing arrangement comprises an annular sealing land (52) having a radially inner surface (54) and a radially outer surface (56) projecting from one of the said moveable parts and at least two brush seal elements (40,42). The brush seal elements (40,42) comprise a mass of bristles arranged in an annular shape, one end of the bristles being fixed (48), the other being free (46). The bristles are packed together in a layer and positioned one side of a backing member (44). At least one brush seal element is provided on the radially inner surface (54) of the sealing land and at least one brush seal element is provided on the radially outer surface (56) of the sealing land (52).

## Description

The invention is a sealing arrangement. In particular it refers to a sealing arrangement for turbomachinery.

The sealing arrangement can be employed to maintain a seal in any suitable rotating machinery including, but not limited to, gas turbine engines.

In a particular problem addressed by the invention it is required for a seal to be formed between relatively moveable components. By way of non limiting example, in a gas turbine engine it is required to form a seal between a turbine or compressor rotor and a engine housing, thereby preventing the uncontrolled flow of gas around the engine, resulting in reduced engine efficiency and performance.

A conventional means of achieving this seal is to utilise one or more static brush seals arranged longitudinally along an engine axis in series, all of which seal against a common rotatable sealing land surface. Alternatively a series of labyrinth seals can be employed.

A brush seal operates by forming a physical barrier of bristles which extend from a static housing and contact a sealing land. Labyrinth seals are not designed to form a physical barrier but rather to form a tortuous route for the air such that there is a controlled but minimal leakage through the seal.

The demerit of such arrangements is during a large relative movement between the rotatable and static components a large clearance gap may develop. In the case of a brush seal if the clearance becomes large enough such that the brush seal no longer makes contact with the sealing land then a leakage path is created. Likewise if a large clearance is formed between the two sides of a labyrinth seal, the route through the seal will not be sufficiently tortuous and an uncontrolled leakage path is created.

Large relative movements between the rotatable and static components may occur for a number of reasons. As the rotatable component accelerates the induced centrifugal force will stretch the component. The rotatable sections will also tend to heat up sooner than the static sections and will therefore undergo thermal expansion before the static sections. Additionally the rotatable sections will move axially relative to the static sections due to thrust being generated. This will be accommodated by a brush seal but may require a larger than optimum leakage path for a labyrinth seal to prevent leakage at the extremes of travel.

According to a first embodiment of the present invention there is provided a sealing arrangement for sealing a leakage gap between relatively moveable parts in a flow path between a region of high pressure and a region of low pressure comprising an annular sealing land having a radially inner surface and a radially outer surface projecting from one of the said moveable parts and at least two brush seal elements, each of said brush seal elements comprising a mass of bristles arranged in an annular shape and which comprises a fixed end portion and a free end portion, said bristles packed together in a layer and positioned one side of a backing member, wherein at least one brush seal element is provided on the radially inner surface of the sealing land and at least one brush seal element is provided on the radially outer surface of the sealing land.

Preferably at least one of the brush seal elements is configured such that the free end portion is radially outward of the fixed end portion.

According to a second embodiment of the present invention there is provided a brush seal element comprising a mass of bristles arranged in a ring, said bristles packed together in a layer and positioned one side of a backing member, each of said bristles comprising a fixed end portion and a free end portion, wherein the free end portion is radially outward of the fixed end portion.

Hereinbefore and hereafter a radial direction is taken to mean a direction perpendicular to the longitudinal axis of the sealing arrangement and an axial direction is taken to mean a direction parallel to the longitudinal axis of the sealing arrangement.

The invention provides a seal between two volumes at different pressures in rotatable machinery. In one embodiment a sealing land is provided which projects from a rotatable component.

The sealing land provides a radially inner and a radially outer sealing surface for a rotatable component in close proximity to a static housing. A brush seal is fixedly joined to the static housing on either side of and abutting the sealing land such that two physical barriers are provided in the leakage flow path. The brush seals are at an angle to the radial direction such that any pressure drop across the bristles will cause the bristles to be forced towards the sealing land.

With this configuration relative radial movements between static and rotatable parts are accommodated by inherent resilience of the bristles.

Should the relative movement be large enough such that the sealing land becomes detached from one of the brush seals, by virtue of the configuration, the sealing land is forced towards the remaining brush seal, thereby retaining a seal.

The invention and how it may be carried into practice will now be described in greater detail with reference by way of example to an embodiment illustrated in the accompanying drawings, in which
Figure 1 shows a cross section of part of a gas turbine engine fitted with the present invention,
Figure 2 shows an enlarged cross section of the present invention,
Figure 3 shows an alternative embodiment of the present invention with the bristles at a different angle,
Figure 4 shows an alternative embodiment of the present invention with the bristles bent part way along their length.

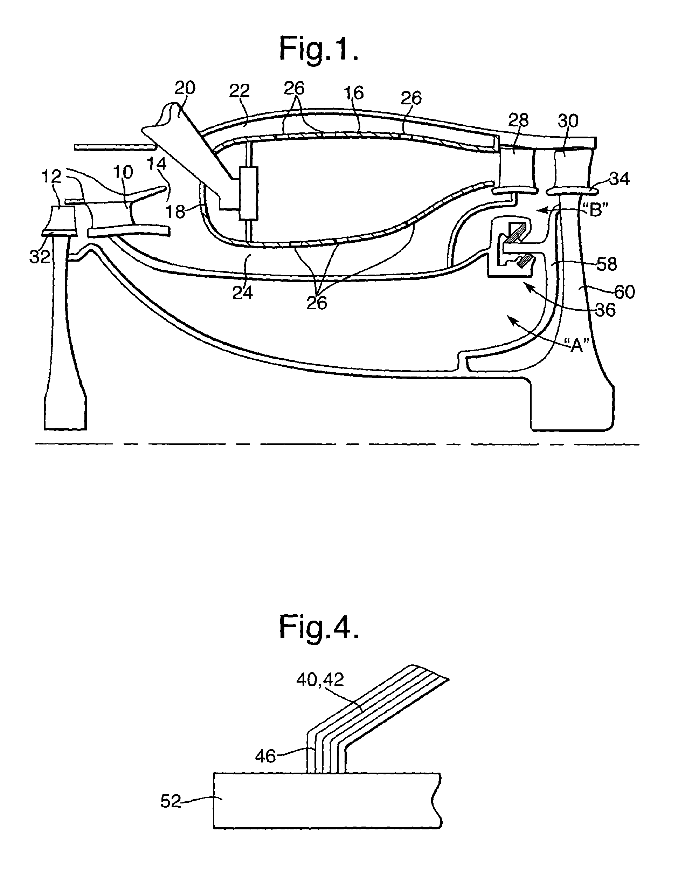

Presented in Figure 1 is a cross section of a part of a gas turbine engine. The overall construction and operation of the engine is of a conventional kind, well known in the field, and will not be described in this specification beyond what is necessary to gain an understanding of the invention.

Pressurised air is delivered to a diffuser 10 from a compressor 12 (of which only one stage is illustrated in Figure 1). The air passes to an annulus 14 and will either be fed directly into a combustor 16 through an inlet hole 18 and past a fuel injector 20, or will pass to an outer annulus 22 or an inner annulus 24. A proportion of the air is fed into the combustor 16 through air intake holes 26.

Air inside the combustor 16 is mixed with fuel delivered by the fuel injector 20, ignited and burned before passing to a nozzle guide vane 28 and a turbine section 30 (only one stage of which is illustrated here).

It will be appreciated that there are a number of leakage paths inside such an engine structure, one of which, by way of non limiting example, is between the compressor 12 and the turbine 30 as an adequate seal is not achieved between the compressor platform 32 and the diffuser 10. Nor is an adequate seal formed between the nozzle guide vane 28 and the turbine platform 34.

A sealing arrangement 36 provides a seal between the high pressure region "A" and the relatively low pressure region "B". It will be appreciated that there is a pressure drop across the combustor 16 and NGV 28 which will be roughly equivalent to the pressure drop across the sealing arrangement 36.

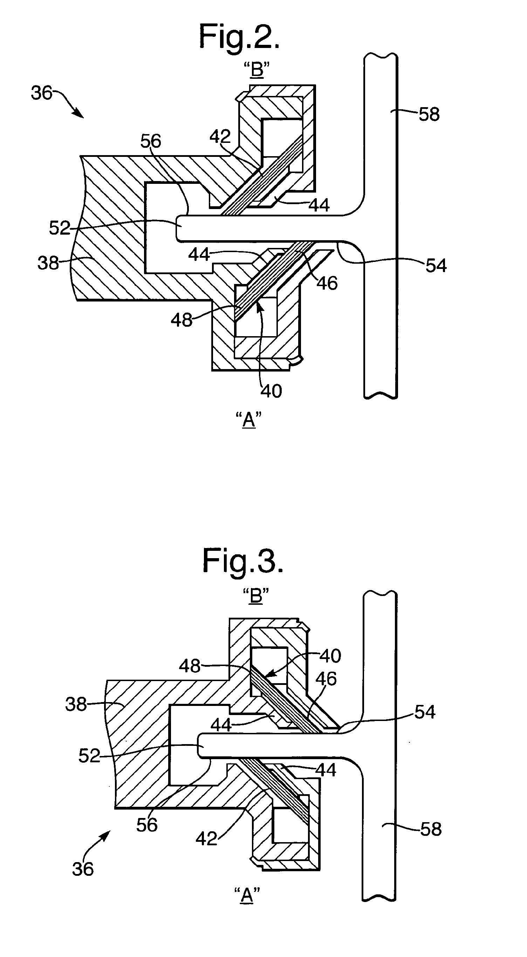

An enlarged view of the sealing arrangement 36 is presented in Figure 2. A seal housing 38 retains a radially inner brush seal 40, and a radially outer brush seal 42, both of which are comprised by a mass of bristles packed together in a layer and positioned one side of a backing member 44. The bristles are arranged such that they have a free end portion 46 and a fixed end portion 48. The bristles of the radially inner brush seal 40 is configured such that the free end portion 46 is radially outward of the fixed end 48. The bristles of the radially outer brush seal 42 is configured such that the free end portion 46 is radially inward of the fixed end portion 48.

A sealing land 52 is positioned such that its radially inner surface 54 abuts the free end portion 46 of the inner brush seal 40 and its radially outer surface 56 abuts the free end portion 46 of the radially outer brush seal 42.

In this embodiment the sealing land 52 is fixedly joined to a rotatable component via a plate 58 fixedly joined to a turbine disc 60. One skilled in the art would appreciate that this arrangement is typically used to facilitate adequate cooling of the turbine disc and blades.

The bristles of the brush seals 40,42 are preferably aligned with the axial direction of the engine. That is to say, when viewed from a radially outward position, the fixed end portion 48 appears to be axially aligned with the free end portion 46.

The bristles are at an angle to the radial direction in so far as the free end portion 46 is not radially aligned with the fixed end portion 48. That is to say the axis of each bristle is not perpendicular to the longitudinal axis of the engine.

In operation the sealing arrangement 36 forms a seal between the high pressure region "A" and the low pressure region "B". The pressure drop across the brush seals 40,42 will tend to force the bristles towards their sealing land surfaces 54,56.

During a large radial relative movement in which, by way of non limiting example, the turbine disc 60, and hence the sealing land 52, translates radially outwards, a clearance may be formed between the radially inner brush seal 40 and the radially inner surface 54. This forms a leakage path. However, in this example the radial translation will have caused the radially outer surface 56 to have translated towards the radially outer brush seal 42, thereby retaining a gas path seal.

It will be appreciated that a relative movement whereby the rotor 60 moves radially inwards will be accommodated in a similar manner.

By arranging the bristles such that they are perpendicular to the axial direction of the sealing arrangement, although still being at an angle to the radial direction, the effect of 'blow-down' is reduced. 'Blow-down' is a phenomenon familiar to those skilled in the art that occurs due to the pressure difference applied across a brush seal whereby the bristles deflect towards and exert force on the seal land. The overall length of the bristle required to fill the sealing gap is shorter for an arrangement where the bristles are substantially perpendicular to the axial direction of the sealing arrangement. Consequently they are stiffer than a seal in which the bristles are at an angle to the axial direction and therefore present a smaller surface area for the pressurised gas to act upon. Consequently the resultant wear on the bristle ends will be reduced.

However, it will be appreciated that a configuration whereby the bristles are provided at an angle to the axial direction as well as at an angle to the radial direction of the engine (that is to say, the bristles have a circumferential component) may be beneficial, since this will help to maintain contact between the brush seals 40,42 and the sealing land surfaces 54,56. Such a configuration will allow the bristles to bend along their length during relative movements between a rotatable and static component. In a configuration where the bristles are aligned both in the axial and radial direction, relative movements between the rotatable and static component may lead to the bristles being compressed and possibly buckled. This may lead to permanent damage to the brush seal bristles and the sealing surface 54,56, resulting in a gap being formed between the bristles and the sealing surface 54,56 and hence allowing an uncontrolled passage of fluid from high pressure region to the low pressure region .

An alternative embodiment of the sealing arrangement 36 is presented in Figure 3. All features of the embodiment in Figure 3 are common to those on the embodiment in Figure 2 other than the bristles of the brush seals 40,42 are angled to the radial direction in an opposite direction.

In operation the sealing arrangement 36 forms a seal between the high pressure region "A" and the low pressure region "B". The pressure drop across the brush seals 40,42 will tend to force the bristles away from their sealing land surfaces 54,56. Hence during a relative radial movement of the rotable and the static components the bristles will flex more easily away from the sealing surfaces 54,56. While the configuration presented in Figure 2 will be of benefit in engines where small and infrequent relative rotor movements are expected, the configuration of Figure 3 may be of more use where larger and/or more frequent relative radial movements are expected, thereby retaining and adequate seal but reducing the possibility of damage and excessive wear to the brush seal.

It will be appreciated that the embodiment of Figure 3 will not suffer from blow down. Bristles for such a configuration are configured such that in operation they have sufficient resilience to overcome the separating force induced by the pressure drop across the bristles to ensure the bristles remain in contact with the sealing surfaces 54,56. It will be appreciated that the resultant wear on the bristle ends in such a configuration will be reduced compared to a conventional brush seal arrangement.

In a further embodiment, as illustrated in Figure 4, the bristles of the brush seals 40,42 are bent part way along their length such that for a part of the brush seal 40,42 length the bristles are substantially aligned with the radial direction.

The sealing arrangement 36 may be formed as a continuous ring or as a plurality of segments.

Although, for illustratative purposes, the figures show a turbine stage of a gas turbine engine, the present invention is considered to be particularly useful in compressor stages of such engines.

The configurations shown in the figures are diagrammatic. Although aspects of the invention have been disclosed with reference to the embodiment shown in the accompanying drawings, it is to be understood that the invention is not limited to the precise embodiments and that various change and modifications may be affected without further inventive skill and effort. For example the design and positioning of the sealing arrangement and the sealing land may vary. Likewise the combination and configuration of these components will vary between designs.

## Claims

1. A sealing arrangement (36) for sealing a leakage gap between relatively moveable parts in a flow path between a region of high pressure (A) and a region of low pressure (B) comprises an annular sealing land (52) having a radially inner surface (54) and a radially outer surface (56) projecting from one of the said moveable parts and at least two brush seal elements (40,42), each of said brush seal elements (40,42) comprising a mass of bristles arranged in an annular shape and which comprises a fixed end portion (48) and a free end portion (46), said bristles packed together in a layer and positioned one side of a backing member (44), wherein at least one brush seal element is provided on the radially inner surface of the sealing land (54) and at least one brush seal element is provided on the radially outer surface (56) of the sealing land (52).

2. A sealing arrangement (36) as claimed in claim 1 wherein at least one of the brush seal elements (40,42) is configured such that the free end portion (46) is radially outward of the fixed end portion (48).

3. A sealing arrangement (36) as claimed in claim 1 or claim 2 wherein the backing member (44) is interposed between said bristle layer and said region of low fluid pressure (B).

4. A sealing arrangement (36) as claimed in claim 1 or claim 2 wherein the backing member (44) is interposed between said bristle layer and said region of high fluid pressure (A).

5. A sealing arrangement (36) as claimed in any one of the preceding claims wherein the bristles are at an angle to the radial direction of the sealing arrangement (36).

6. A sealing arrangement (36) as claimed in any preceding claim wherein the bristles are provided at an angle of up to about 45 degrees to the radial direction of the sealing arrangement (36).

7. A sealing arrangement (36) as claimed in any preceding claim wherein the bristles are substantially perpendicular to the axial direction of the sealing arrangement (36).

8. A sealing arrangement (36) as claimed in claim 1 to 6 wherein the bristles are provided at an angle to the axial direction of the sealing arrangement (36).

9. A sealing arrangement (36) as claimed in claim 8 wherein the bristles are provided at an angle of up to about 10 degrees to the axial direction of the sealing arrangement (36).

10. A sealing arrangement (36) as claimed in any preceding claim wherein the brush seal elements are formed as a ring.

11. A sealing arrangement (36) as claimed in any preceding claim wherein the brush seal elements are divided into a plurality of segments.

12. A sealing arrangement (36) as claimed in any preceding claim wherein the bristles are configured such that a pressure drop across the bristles will act to force the bristles towards the sealing land (52).

13. A sealing arrangement (36) as claimed in claims 1 to 11 wherein the bristles are configured such that a pressure drop across the bristles will act to force the bristles away from the sealing land (52).

14. A sealing arrangement (36) as claimed in any preceding claim wherein the bristles are bent part way along their length.

15. A sealing arrangement (36) as claimed in any preceding claim wherein the sealing land (52) forms part of a turbine assembly.

16. A sealing arrangement (36) as claimed in claims 1 to 12 wherein the sealing land (52) forms part of a compressor assembly.

17. A sealing arrangement (36) as hereinbefore described with reference to the accompanying drawings.

18. A brush seal element (42) comprising a mass of bristles arranged in a ring, said bristles packed together in a layer and positioned one side of a backing member (44), each of said bristles comprising a fixed end portion (48) and a free end portion (46), wherein the free end portion is radially outward of the fixed end portion (48).

19. A brush seal element (42) sealing arrangement as claimed in claim 18 wherein the bristles are bent part way along their length.

20. A brush seal as hereinbefore described with reference to the accompanying drawings.
